# EUROPEAN PATENT SPECIFICATION

(11) **EP 2 913 486 B1**
(45) Date of publication and mention of the grant of the patent: **04.04.2018**
(21) Application number: 15150451.1
(22) Date of filing: 24.09.2010
(51) Int. Cl.: F01K 23/02, F01D 15/10, F01K 23/06, F01K 23/10, F01K 23/12

(54) **POWER GENERATION METHOD AND TURBINE GENERATOR**
STROMERZEUGUNGSVERFAHREN UND TURBINENGENERATOR
PROCÉDÉ DE PRODUCTION D'ÉNERGIE ET GÉNÉRATEUR À TURBINE

(43) Date of publication of application: 02.09.2015
(62) Divisional of application: 10857557.2
(73) Proprietor: MITSUBISHI HEAVY INDUSTRIES, LTD., Tokyo 108-8215 (JP)
(72) Inventor: Ichiki, Yoshihiro, Tokyo, 108-8215 (JP); Shiraishi, Keiichi, Tokyo, 108-8215 (JP); Nishikawa, Yoshihiko, Tokyo, 108-8215 (JP)
(74) Representative: Henkel, Breuer & Partner

(56) References cited:
- WO-A1-2010/074043
- WO-A1-2010/074173

## Description

### [Technical Field]

The present invention relates to a power generation method and to a turbine generator formed by connecting in series a steam turbine and a power turbine (a gas turbine) driven by energy of exhaust gas (combustion gas) exhausted from an engine main body which preferably constitutes a marine diesel engine, a diesel engine for an onshore generator, or the like.

### BACKGROUND ART

A known technique of JP 63-186916A is for collecting exhaust gas energy as power source by introducing a part of the exhaust gas from the diesel engine to a power turbine, instead of supplying to a supercharger.
Also disclosed in JP 63-186916A is how to reduce a variation range of the amount of the exhaust gas supplied to the supercharger from the diesel engine by adjusting the amount of the exhaust gas entering the power turbine. To adjust the amount of the exhaust gas entering the power turbine, a gas inlet of the power turbine is formed by a plurality of passages and in each of the passages, a bypass valve is provided.

WO 2010/074173A1 discloses a power generation method and a turbine generator which is formed by connecting a power turbine and a steam turbine in series, wherein the power turbine is driven by exhaust gas from a diesel engine and the steam turbine is driven by steam generated by heat exchange with the exhaust gas in an exhaust-gas heat exchanger. The turbine generator has a control device that is capable of improving the responsiveness of the output control for the power turbine and the steam turbine with respect to certain changes in the inboard load. The control device includes a feedforward control unit for controlling the output of the power turbine and of the steam turbine including a feedback control unit for calculating a difference between a target output value of the power turbine calculated from an engine load and an actual output value of the power turbine so as to determine an operation amount of a control valve for adjusting the output of the power turbine, and a power turbine feedforward control unit arranged to extract an operation amount of the control valve from a preset opening-amount command map for the power turbine.

### SUMMARY

### [Technical Problem]

According to JP 63-186916A, the amount of exhaust gas entering the power turbine is adjusted by controlling opening and closing of the bypass valve. In the exhaust heat recovery system, a part of the exhaust gas from the diesel engine is extracted and introduced to the power turbine and the steam produced using the exhaust heat of the exhaust gas is introduced to the steam turbine so as to generate power. Conventionally, an inlet valve for controlling the amount of the exhaust gas introduced to the power turbine is normally an on-off valve, which is not equipped with a function to control the amount of the exhaust gas to a certain amount.

Depending on an operation condition of a ship, the sum of the power generated by the power turbine and the power generated by the steam generator may become surplus with respect to power demand within the ship. The output generated by the power turbine and by the steam turbine relies on the output of the diesel engine. Thus, it is extremely effective to appropriately take measures against the power surplus so as to improve the fuel efficiency rate of the diesel engine.

As one measure against the power surplus, it is known to install a plurality of shaft generators or the like side by side and perform selection control for selecting an active generator, or to apply resistance to a generator so that the power is consumed, or to lower the output of the steam turbine by discarding surplus steam.
However, installing a plurality of shaft generators increases the installation cost. And, releasing the energy to outside of the system to adjust the surplus power is still a waste of fuel of the diesel engine.

In view of the above issues, it is an object of the present invention is to provide a power generation method and a turbine generator, which are capable of controlling the generated power without wasting the fuel of the diesel engine when the demand power decreases, creating the generated-power surplus.

### [Solution to Problem]

The present invention provides a power generation method according to claim 1 and a turbine generator according to claim 5.

According to the invention, when the generated power becomes surplus, the output of the power turbine is reduced. More specifically, the amount of the extracted exhaust gas is reduced, the amount of the exhaust gas supplied to the turbine part of the exhaust turbo-supercharger increases, and the amount of the intake air compressed by the compressor part and supplied to a combustion chamber of the diesel engine increases. As a result, combustion efficiency of the engine is enhanced and fuel consumption rate is improved.

In the case of reducing the output of the steam turbine first, the output of the steam turbine is reduced by dumping the steam generated by the exhaust gas heat exchanger.
In such case, the dumped steam is wasted and this is not favorable for improvement of the fuel consumption rate of the diesel engine. In the present invention, it affects to increase the intake pressure and thus, it is possible to effectively achieve improvement of the fuel consumption efficiency of the engine.
Further, it is possible to promptly control the outputs of the power turbine and the steam turbine. Thus it is possible to minimize fluctuation of frequency and voltage in response to a sudden load change of the generator.

In the invention, a suppliable power by the power turbine and a suppliable power by the steam turbine may be set in advance, and the suppliable power by the power turbine may be minimized and then the suppliable power by the steam turbine is reduced.
In the invention, the controller may comprise a load sharing control part in which a suppliable power by the power turbine and a suppliable power by the steam turbine are set in advance and a suppliable power share is set (in the load sharing control part).

According to each configuration, by presetting the suppliable power by the power turbine and the suppliable power by the steam turbine, it is possible to set an output control range by the power turbine in advance and to perform the reliable control for suppressing the surplus power while improving the fuel consumption rate. Further, the power generation capacity can be set in advance and thus there is a freedom of designing the generator depending on its intended use.

Further, in the invention, the supply of the exhaust gas to the power turbine may be adjusted in accordance with a control signal from a governor part for the power turbine, the control signal having a speed droop control function, and the supply of the steam from the steam turbine may be adjusted in accordance with a control signal from a governor part for the steam turbine, the control signal having a speed droop control function.
Furthermore, in the invention, the controller may comprise a governor part for the power turbine and a governor part for the steam turbine that have speed droop control functions and are provided independently of each other, the exhaust-gas regulating valve may be controlled in accordance with a control signal from the governor part for the power turbine, and the steam regulating valve may be controlled in accordance with a control signal from the governor part for the steam turbine.

According to each configuration, the output of the power turbine and the output of the steam turbine are controlled by independent governors, i.e. the governor part for the power turbine and the governor part for the steam turbine, respectively. The output control of the power turbine and the output control of the steam turbine can be performed independently without correlating them with each other and it is possible to solely reduce the output of the power turbine first.
The speed droop control is one of the control methods for controlling the rotation speed of the generator rotated by the power turbine and the steam turbine. The speed droop control is performed using a control amount calculated by multiplying a difference between the target rotation speed and the actual rotation speed being actually controlled by a proportional gain.

In the invention, the turbine generator may be driven by exhaust energy of the diesel engine for propelling a ship, another diesel engine generator may be provided in addition to the turbine generator, the controller may comprise a load sharing control part in which a suppliable power by the power turbine, a suppliable power by the steam turbine, and a suppliable power by the other diesel engine generator may be set, and when demand power of the ship decreases and generated power becomes surplus, the controller may minimize an output of the other diesel engine generator, minimize an output of the power turbine and then minimize an output of the steam turbine.

According to the configuration, when the supply power is surplus, the output of the diesel engine generator is minimized first and then, if the supply power is still surplus, the output of the power turbine is minimized. Even after this, if the supply power is still surplus, the output of the steam turbine is minimized. More specifically, by minimizing the output of the steam turbine as a final step, it is possible to efficiently improve the fuel consumption rate of the fuel consumed in the diesel engine for propelling the ship and also other diesel engine generator when the supply power is surplus.

### [Advantageous Effects]

According to the present invention, it is possible to provide a power generation method and a turbine generator, which are capable of controlling the generated power without wasting the fuel of the diesel engine when the generated power becomes surplus. The output of the power turbine connected to the generator in series is first reduced. In response to the drop of the output of the power turbine, the amount of the exhaust gas to the turbine part of the exhaust turbo-supercharger of the diesel engine increases to reduce the output of the steam turbine. In response to the increase of pressurized intake air by the exhaust turbo-supercharger, the combustion efficiency of the diesel engine is enhanced and the fuel consumption rate is improved.

### BRIEF DESCRIPTION OF DRAWINGS

[Fig.1]

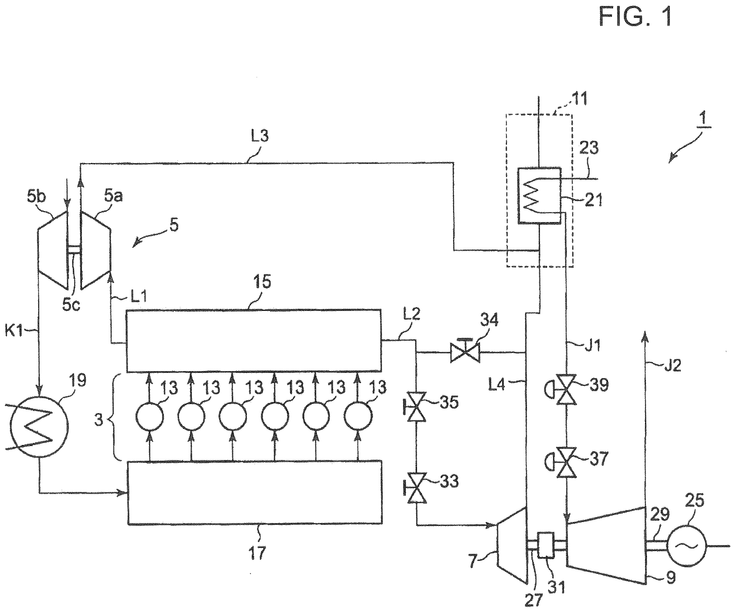

   Fig.1 is an illustration of an overall structure of a turbine generator regarding the present invention.
[Fig. 2]

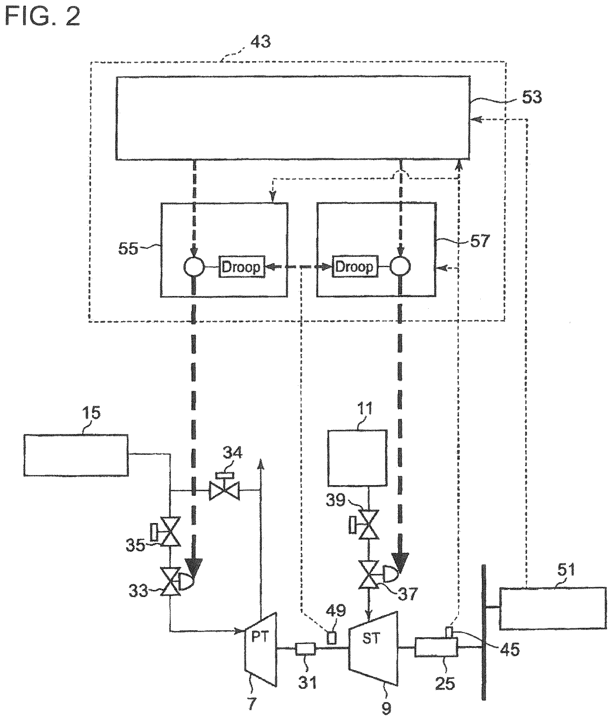

   Fig. 2 is an illustration of a control unit of a first embodiment.
[Fig. 3]

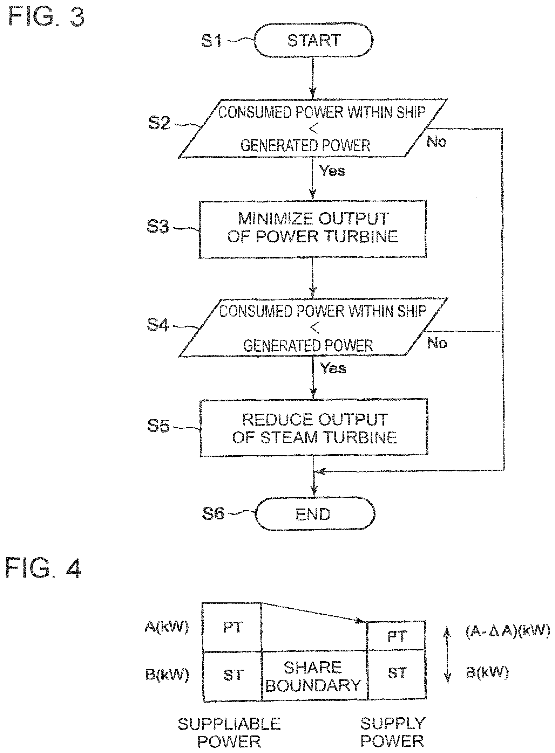

   Fig. 3 is a flow chart of the first embodiment.
[Fig. 4]
   Fig. 4 is an explanatory view of a state of suppressing supply power from becoming surplus, regarding the first embodiment.
[Fig. 5]

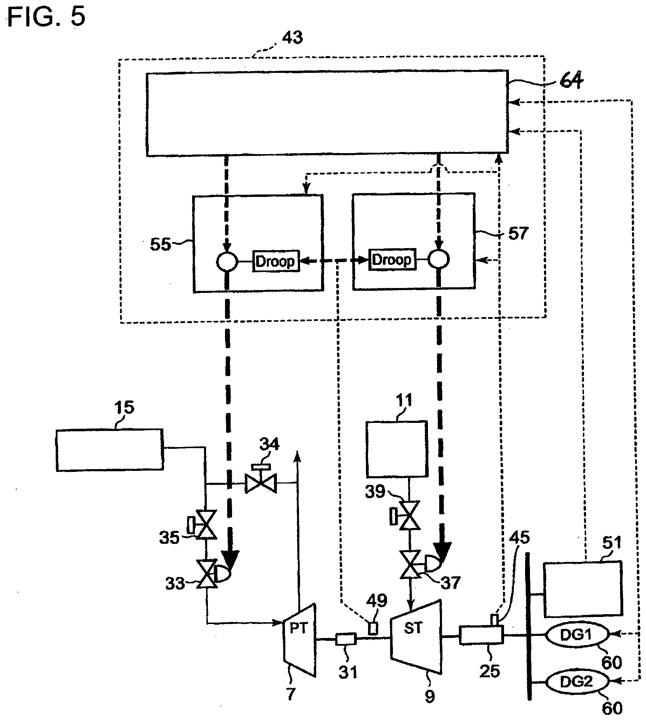

   Fig. 5 is an illustration of a control unit of a second embodiment
[Fig. 6]

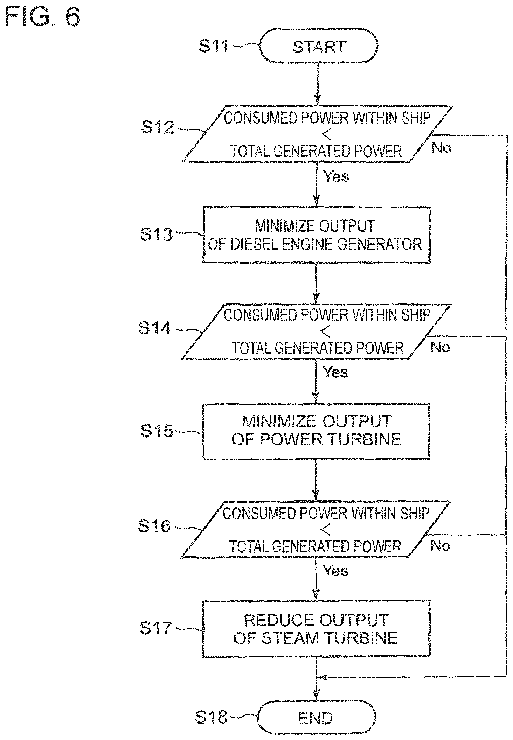

   Fig. 6 is a flow chart of the second embodiment.

### DETAILED DESCRIPTION

Embodiments of the present invention will now be described in detail with reference to the accompanying drawings.

### (FIRST EMBODIMENT)

Fig.1 is an illustration of an overall structure of a turbine generator regarding the present invention. The present embodiment is explained by using a diesel engine for a ship as an example.
A turbine generator 1 is formed with a diesel engine 3 for propelling a ship, an exhaust turbocharger 5, a power turbine (a gas turbine) 7, a steam turbine 9, and an exhaust gas economizer 11 as an exhaust gas heat exchanger.
The output from the diesel engine 3 is directly or indirectly connected to a screw propeller via a propeller shaft. An exhaust port of a cylinder part 13 of each cylinder of the diesel engine 3 is connected to an exhaust manifold 15 as an exhaust collecting pipe. The exhaust manifold 15 is connected to an inlet side of a turbine part 5a of the exhaust turbocharger 5 via a first exhaust pipe L1. The exhaust manifold 15 is also connected to an inlet side of the power turbine 7 via a second exhaust pipe L2 (an extraction path) so that a part of the exhaust gas is extracted before being supplied to the exhaust turbocharger 5 and then supplied to the power turbine 7.

An intake port of each cylinder part 13 is connected to an intake manifold 17. The intake manifold 17 is connected to a compressor part 5b of the exhaust turbo-supercharger 5 via an intake pipe K1. In the intake pipe K1, an air cooler (an intercooler) 19 is arranged.
The exhaust turbo-supercharger 5 is formed by the turbine part 5a, the compressor part 5b and a rotation shaft 5c connecting the turbine part 5a and the compressor part 5b together.

The power turbine 7 is rotated by the exhaust gas extracted from the exhaust manifold 15 via the second exhaust pipe L2. The steam turbine 9 is rotated by steam generated in the exhaust gas economizer 11.
The exhaust gas economizer 11 produces the steam in the following manner. The exhaust gas is introduced to a heat exchanger 21 from an outlet side of the turbine part 5a of the exhaust turbo-supercharger 5 via a third exhaust pipe L3 and from an outlet side of the power turbine 7 via a fourth exhaust pipe L4. Then, the heat exchanger 21 produces the steam by evaporating water supplied by a water supply pipe 23 with heat of the introduced exhaust gas. The steam produced in the exhaust gas economizer 11 is introduced to the steam turbine 9 via a first steam pipe J1 and then, the steam gas having performed work in the steam turbine 9 is drained via a second steam pipe J2 and is led to a condenser (a steam condenser) not shown.

The power turbine 7 and the steam turbine 9 are directly connected so as to drive a generator 25. A rotation shaft 29 of the steam turbine 9 is connected to the generator 25 via a reducer and a coupling that are not shown in the drawing. A rotation shaft 27 of the power turbine 7 is coupled to the rotation shaft 29 of the steam turbine 9 via a reducer not shown and a clutch 31.

In the second exhaust pipe L2, an exhaust-gas regulating valve 33 for regulating a supply of the exhaust gas to the power turbine 7 and an emergency shutoff valve 35 for shutting off the supply of the exhaust gas to the power turbine during emergency are provided. Further, a bypass valve 34 is provided between the second exhaust pipe L2 and the fourth exhaust pipe L4 for preventing over-supercharging (supercharging beyond an optimum operating pressure of the engine) of the turbine part 5a of the exhaust turbo-supercharger 5 when the emergency shutoff valve 35 is shut off.

Further, in the first steam pipe J1, a steam regulating valve 37 for regulating the supply of the steam introduced to the steam turbine 9, and an emergency shutoff valve 39 for shutting off the supply of the steam to the steam turbine 9 during emergency are provided. A controller 41 controls opening degrees of the exhaust-gas regulating valve 33 and the steam regulating valve 37. The controller 41 is described later in details.
As described above, the generator 25 is powered by an exhaust energy recovery system powered by exhaust gas energy of the exhaust gas (the combustion gas) of the diesel engine for propelling a ship.

As shown in Fig.2, inputted to the controller 43, is a signal from a power sensor 45 for detecting output power of the generator 25 and a signal from a rotation sensor 49 for detecting a rotation speed of the rotation shaft 29 of the steam turbine as a rotation speed of the generator 25. Further, a signal is inputted to the controller 43 from a consumed-power sensor 51 for detecting consumed power within the ship.

The controller 43 includes a load sharing control part 53, a governor part 55 for the power turbine and a governor part 57 for the steam turbine. In the load sharing control part 53, a suppliable power (an output share ratio) by the power turbine 7 is set in advance, for example, at A (KW) and a suppliable power (an output share ratio) by the steam turbine 9 is set in advance, for example, at B (KW) (see Fig.3).
Then, a command signal of power generation capacity corresponding to the share ratio is outputted from the load sharing control part 53 to the governor part 55 for the power turbine and to the governor part 57 for the steam turbine.

In accordance with the output share ratio of the power turbine 7, which has been set in advance in the load sharing control part 53, the governor part 55 for the power turbine 7 calculates a control signal based on a difference between a target rotation speed and an actual rotation speed detected by the rotation sensor 49 so as to stabilize at the target rotation speed with respect to the rotation speed fluctuation of the generator 25, based on the control function by the speed droop control (proportional control) having been set. Then the control signal is outputted to the exhaust-gas regulating valve 33 and the opening of the exhaust-gas regulating valve 33 is controlled to control the flow of the exhaust gas supplied to the power turbine 7. This speed droop control function is used to calculate a control amount by multiplying a difference between the target rotation speed and the actual rotation speed being actually controlled by a proportional gain.

In a manner similar to the governor part 55 for the power turbine 7, in accordance with the output share ratio of the steam turbine 9, which has been set in advance in the load sharing control part 53, the governor part 57 for the steam turbine 9 calculates a control signal based on a difference between a target rotation speed and an actual rotation speed detected by the rotation sensor 49 so as to stabilize at the target rotation speed with respect to the rotation speed fluctuation of the generator 25, based on the control function by the speed droop control (proportional control) having been set. Then the control signal is outputted to the steam regulating valve 37 and the opening of the steam regulating valve 37 is controlled to control the flow of the steam supplied to the steam turbine 9.

In reference to a flow chart of Fig.3 and an explanatory view of power supply, a method of suppressing power when the demand power decreases and the power generated by the generator 25 becomes surplus, is explained.

First, the control starts in a step S1. In a step S2, it is determined whether the generated power from the generator 25 exceeds the consumed power within the ship and is surplus, based on the signal from the consumed-power sensor 51 and the power sensor 45 of the generator 25. If the generated power exceeds the consumed power, the output of the power turbine 7 is minimized in a step S3.

Minimizing of the output of the power turbine 7 includes to reduce the output of the power turbine 7 to a preset minimum output, and to reduce the output of the power turbine 7 to zero. Then, it is determined again in a step S4 whether the generated power from the generator 25 exceeds the consumed power within the ship and is surplus.

Further, when minimizing the output of the power turbine 7, the output of the power turbine 7 may be minimized in a phased fashion or in a continuous fashion, and it is of course possible, before the output of the power turbine 7 reaches the minimum, to minimize the output of the power turbine 7 while performing the step S4 for determining whether the generated power is surplus.
The output of the power turbine 7 is minimized in the following manner. The opening of the exhaust-gas regulating valve 33 is adjusted based on the signal from the governor part 55 set in the controller 43. With a proportional relationship between the rotation speed of the generator 25 and the generated power, when the generated power is surplus, the output of the power turbine 7 decreases so as to achieve the target rotation speed of the generator 25 corresponding to the target generated power based on the consumed power within the ship.

In the step S4, in such case that the generated power from the generator 25 exceeds the consumed power within the ship and is surplus, the output of the power turbine 7 is already minimized. Next, the output of the steam turbine 9 is reduced in a step S5, and the process ends in a step S6. Once the process ends in the step S6, the process is repeated from the step S2. The process is repeated at specific time interval.

Fig.4 shows the output A (KW) of the power turbine (PT) 7 and the output B (KW) of the steam turbine (ST) 9 that are initialized by the load sharing control part 53. Only the output A of the power turbine 7 is suppressed so as to reduce the power to A-ΔA that is set as a minimum value.

According to the first embodiment, when the generated power becomes surplus, the output of the power turbine 7 is reduced by means of the controller 43. More specifically, the amount of the exhaust gas extracted from the exhaust manifold 15 decreases, the amount of the exhaust gas supplied to the turbine part 5a of the exhaust turbo-supercharger 5 increases, and the amount of the intake air compressed by the compressor part 5b and supplied to a combustion chamber of the diesel engine 3 increases. As a result, combustion efficiency of the engine is enhanced and fuel consumption rate is improved.

In the case of reducing the output of the steam turbine 9 first, the output of the steam turbine 9 is reduced by dumping the steam generated by the exhaust gas economizer 11. In such case, the dumped steam is wasted and this is not favorable for improvement of the fuel consumption rate of the diesel engine 3. In the present invention, it works to enhance the intake pressure to the combustion chamber and thus, it is possible to effectively achieve improvement of the fuel consumption efficiency of the engine.
Further, it is possible to promptly control the outputs of the power turbine 7 and the steam turbine 9. Thus it is possible to minimize fluctuation of frequency and voltage in response to a sudden load change of the generator 25.

By presetting the suppliable power by the power turbine 7 and the suppliable power by the steam turbine 9, it is possible to set an output control range by the power turbine 7 in advance and to perform the reliable control for suppressing the surplus power while improving the fuel consumption rate. Further, the power generation capacity can be set in advance and thus there is a freedom of designing the generator depending on its intended use.

According to the first embodiment, the output of the power turbine 7 and the output of the steam turbine 9 are controlled by independent governors, i.e. the governor part 55 for the power turbine and the governor part 57 for the steam turbine, respectively. The output control of the power turbine 7 and the output control of the steam turbine 9 are not correlated with each other and can be performed independently and it is possible to solely reduce the output of the power turbine 7 first.

### (SECOND EMBODIMENT)

A second embodiment is explained in reference to Fig.5 and Fig.6. In the second embodiment, the power used in the ship is supplied from the generator 25 and also from a plurality of diesel generators (other diesel engine generators) 60 installed in the ship separately from the generator 25.
More specifically, the generator 25 explained in the first embodiment generates power using the exhaust gas recovered from the diesel engine 3 for propelling the ship connected directly or indirectly to the a screw propeller via a propeller shaft. In addition to the generator 25, the diesel engine generators 60 particularly for power generation are provided separately.

A controller 43 includes a load sharing control part 64, the governor part 55 for the power turbine and the governor part 57 for the steam turbine. In the load sharing control part 64, a suppliable power (an output share ratio) by the power turbine 7, a suppliable power (an output share ratio) by the steam turbine 9, and a suppliable power (an output share ratio) by the plurality of diesel engine generators 60 installed separately in the ship, are set in advance.
The suppliable power calculated from the above set ratio, or suppliable power having been set is inputted from the load sharing control part 64 to the governor part 55 for the power turbine, the governor part 57 for the steam turbine and a governor part (not shown) for the diesel engine generators 60.

Next, explained in reference to Fig.6 is an output control method when the generated power by the generator 25 and the diesel engine generators 60 exceeds the consumed power within the ship and the generated power is surplus. The flow chart of Fig.6 includes steps S12, S13 in addition to steps S14 to S18 which are similar to the steps S2 to S6 of Fig.3 of the first embodiment.

First, the control starts in a step S11. In a step S12, it is determined whether a sum of the generated power by the generator 25 and the generated power by the diesel engines 60 exceeds the consumed power within the ship and is surplus, based on the signal from the consumed-power sensor 51, a power signal from the power sensor 45 of the generator 25 and a power signal from the diesel engine 60. If the total generated power exceeds the consumed power, the outputs of the diesel engine generators (other diesel engine generators) 60 are minimized in a step S13. Then it is determined again in a step S14 whether sum of the generated power by the generator 25 and the generated power by the diesel engines 60 exceeds the consumed power within the ship and is surplus. In such case that the sum exceeds the consumed power, the output of the power turbine 7 is minimized in the step S15. The process of S14 and beyond is substantially same as the first embodiment.

According to the second embodiment, when the supply power is surplus, the output of the diesel engine generators 60 is minimized first and then, if the supply power is still surplus, the output of the power turbine 7 is minimized. Even after this, if the supply power is still surplus, the output of the steam turbine 9 is minimized. More specifically, the output of the steam turbine 9 is minimized as a final step. In this manner, it is possible to efficiently improve the fuel consumption rate of the fuel consumed in the diesel engine 3 for the turbine generator and also the diesel engine generators60 when the supply power is surplus. The rest is substantially same as the first embodiment and thus have the same structure and effects.

### [Industrial Applicability]

The present invention can be applied to a power generation method and a turbine generator which is formed by connecting a power turbine (a gas turbine) and a steam turbine in series, the power turbine being driven by energy of exhaust gas (combustion gas) exhausted from an engine main body constituting a diesel engine for a ship, a diesel engine for an on-land generator or the like, as it is capable of controlling generated power without wasting fuel of the diesel engine when a demand power decreases and the generated power becomes surplus.

## Claims

1. A power generation method comprising:
driving a diesel engine (3) and exhausting exhaust gas from the diesel engine (3);
driving a power turbine (7) by the exhaust gas exhausted from the diesel engine (3);
generating steam by introducing the exhaust gas from the diesel engine (3) to an exhaust-gas heat exchanger (21);
driving a steam turbine (9) by the steam generated by the exhaust-gas heat exchanger (21);
when demand power decreases and generated power becomes surplus, reducing supply of the exhaust gas to the power turbine (7); and
after output of the power turbine (7) is reduced to a minimum, reducing supply of the steam to the steam turbine (9) .

2. The power generation method according to claim 1, wherein reducing the output of the power turbine (7) to the minimum includes reducing the output of the power turbine (7) to a preset minimum output including reducing the output of the power turbine (7) to zero.

3. The power generation method according to claim 1 or 2,
wherein a suppliable power by the power turbine (7) and a suppliable power by the steam turbine (9) are set in advance, and
wherein the method further comprises the step of:
when the demand power decreases and the generated power becomes surplus, minimizing the suppliable power by the power turbine (7) and then reducing the suppliable power by the steam turbine (9).

4. The power generation method according to claim 1, 2 or 3, further comprising the step of:
driving a diesel engine generator (60);
wherein a suppliable power by the power turbine (7), a suppliable power by the steam turbine (9) and a suppliable power by the diesel engine generator (60) are set in advance, and
wherein the method further comprises the step of:
when the demand power decreases and the generated power becomes surplus, minimizing the suppliable power by the diesel engine generator (60) and then reducing the suppliable power by the steam turbine (9).

5. A turbine generator which is formed by connecting a power turbine (7), preferably a gas turbine, and a steam turbine (9) in series, the power turbine (7) arranged to be driven by energy of exhaust gas exhausted from a diesel engine (3) having an exhaust turbo-supercharger (5), the turbine generator comprising:
an extraction path (L1) for extracting a part of the exhaust gas and supplying the part of the exhaust gas to the exhaust turbo-supercharger (5);
an exhaust-gas regulating valve (33) for regulating a supply of the exhaust gas to the power turbine (7), wherein the exhaust-gas regulating valve (33) is provided in an extraction path (L2) for extracting a part of the exhaust gas to the power turbine (7);
a steam supply path (J1) for supplying to the steam turbine (9) steam generated by heat exchange with exhaust heat of the exhaust gas in an exhaust-gas heat exchanger (21);
a steam regulating valve (37) for regulating the supply of the steam, wherein the steam regulating valve (37) is provided in the steam supply path (J1); and
a controller (43) which is configured to, when demand power decreases and generated power becomes surplus, reduce the supply of the exhaust gas to the power turbine (7) to minimize an output of the power turbine (7) and then reduce the supply of the steam to the steam turbine (9).

6. The turbine generator according to claim 5, wherein the controller (43) is configured to, for minimizing the output of the power turbine (7), reduce the output of the power turbine (7) to a preset minimum output including reducing the output of the power turbine (7) to zero.

7. The turbine generator according to claim 5 or 6,
wherein the controller (43) comprises a load sharing control part (53;64) in which a suppliable power by the power turbine (7) and a suppliable power by the steam turbine (9) are set in advance and in which a suppliable power share is set.

8. The turbine generator according to claim 5, 6 or 7,
wherein the controller (43) comprises a governor part (55) for the power turbine (7) and a governor part (57) for the steam turbine (9) that have speed droop control functions and are provided independently of each other,
wherein the exhaust-gas regulating valve (33) is arranged to be controlled in accordance with a control signal from the governor part (55) for the power turbine (7), and
wherein the steam regulating valve (37) is arranged to be controlled in accordance with a control signal from the governor part (57) for the steam turbine (9).

9. The turbine generator according to and one of claims 5 to 8,
wherein the turbine generator is arranged to be driven by exhaust energy of the exhaust gas from a diesel engine (3) for propelling a ship,
wherein a diesel engine generator (60) is provided in addition to the turbine generator,
wherein the controller (43) comprises a load sharing control part (64) in which a suppliable power by the power turbine (7), a suppliable power by the steam turbine (9), and a suppliable power by the diesel engine generator (60) are set, and
wherein, when demand power of the ship decreases and the generated power becomes surplus, the controller (43) is configured to minimize the suppliable power of the diesel engine generator (60), minimize the suppliable power of the power turbine (7) and then reduce the suppliable power of the steam turbine (9).

## Patentansprüche

1. Ein Energieerzeugungsverfahren mit:
Antreiben eines Dieselmotors (3) und Ausstoßen von Abgas von dem Dieselmotor (3),
Antreiben einer Energieturbine (7) durch das von dem Dieselmotor (3) ausgestoßene Abgas,
Erzeugen von Dampf durch Einbringen des Abgases von dem Dieselmotor (3) in einen Abgas-Wärmetauscher (21),
Antreiben einer Dampfturbine (9) durch den durch den Abgas-Wärmetauscher (21) erzeugten Dampf,
Reduzieren der Zufuhr des Abgases zu der Energieturbine (7), wenn eine Energieanforderung abnimmt und überschüssige Energie erzeugt wird, und
Verringern der Zufuhr des Dampfes zu der Dampfturbine (9) nach der Reduzierung der Ausgabe der Energieturbine (7) auf ein Minimum.

2. Das Energieerzeugungsverfahren gemäß Anspruch 1, wobei das Verringern der Ausgabe der Energieturbine (7) auf das Minimum ein Verringern der Ausgabe der Energieturbine (7) auf eine voreingestellte Minimumausgabe einschließlich Verringern der Ausgabe der Energieturbine (7) auf null umfasst.

3. Das Energieerzeugungsverfahren gemäß Anspruch 1 oder 2,
wobei eine durch die Energieturbine (7) lieferbare Energie und eine durch die Dampfturbine (9) lieferbare Energie vorab eingestellt werden, und
wobei das Verfahren ferner den folgenden Schritt aufweist:
Minimieren der durch die Energieturbine (7) zuführbaren Energie und dann Verringern der durch die Dampfturbine (9) zuführbaren Energie, wenn die Energieanforderung abnimmt und überschüssige Energie erzeugt wird.

4. Das Energieerzeugungsverfahren gemäß Anspruch 1, 2 oder 3, ferner mit dem Schritt:
Antreiben eines Dieselmotorgenerators (60),
wobei eine durch die Energieturbine (7) zuführbare Energie, eine durch die Dampfturbine (9) zuführbare Energie und eine durch den Dieselmotorgenerator (60) zuführbare Energie vorab eingestellt werden, und
wobei das Verfahren ferner den Schritt aufweist:
Minimieren der zuführbaren Energie durch den Dieselmotorgenerator (60) und dann Verringern der zuführbaren Energie durch die Dampfturbine (9), wenn die Energieanforderung abnimmt und überschüssige Energie erzeugt wird.

5. Ein Turbinengenerator, der durch Verbinden einer Energieturbine (7), vorzugsweise einer Gasturbine, und einer Dampfturbine (9) in Reihe gebildet ist, wobei die Energieturbine (7) angeordnet ist, um durch Energie von Abgas, das von einem Dieselmotor (3) mit einem AbgasTurbolader (5) ausgestoßen wird, angetrieben zu werden, wobei der Turbinengenerator aufweist:
einen Extraktionsweg (L1) zum Extrahieren eines Teils des Abgases und Zuführen des Teils des Abgases zu dem AbgasTurbolader (5),
ein Abgas-Regulierventil (33) zum Regulieren einer Zufuhr des Abgases zu der Energieturbine (7), wobei das Abgas-Regulierventil (33) in einem Extraktionsweg (L2) zum Extrahieren eines Teils des Abgases zu der Energieturbine (7) vorgesehen ist,
einen Dampfzuführweg (J1) zum Zuführen von Dampf, der durch Wärmeaustausch mit Abgaswärme des Abgases in einem Abgas-Wärmetauscher (21) erzeugt wurde, zu der Dampfturbine (9),
ein Dampfregulierventil (37) zum Regulieren der Zufuhr des Dampfs, wobei das Dampf-Regulierventil (37) in dem Dampfzuführweg (J1) vorgesehen ist, und
einen Kontroller (43), der konfiguriert ist, um, wenn eine Energieanforderung abnimmt und überschüssige Energie erzeugt wird, die Zufuhr des Abgases zu der Energieturbine (7) zu verringern, um eine Ausgabe der Energieturbine (7) zu minimieren, und dann die Zufuhr des Dampfes zu der Dampfturbine (9) zu verringern.

6. Der Turbinengenerator gemäß Anspruch 5, wobei der Kontroller (43) konfiguriert ist, um, zum Minimieren der Ausgabe der Energieturbine (7), die Ausgabe der Energieturbine (7) auf eine voreingestellte Minimalausgabe zu verringern, einschließlich einer Verringerung der Ausgabe der Energieturbine (7) auf null.

7. Der Turbinengenerator gemäß Anspruch 5 oder 6,
wobei der Kontroller (43) ein Lastaufteilungs-Steuerteil (53;64) aufweist, in dem eine durch die Energieturbine (7) zuführbare Energie und eine durch die Dampfturbine (9) zuführbare Energie vorab eingestellt sind oder werden und in dem ein Anteilsverhältnis der zuführbaren Energie eingestellt ist oder wird.

8. Der Turbinengenerator gemäß Anspruch 5, 6 oder 7,
wobei der Kontroller (43) ein Reglerteil (55) für die Energieturbine (7) und ein Reglerteil (57) für die Dampfturbine (9) aufweist, die Geschwindigkeitsregeldifferenz-Steuerfunktionen haben und unabhängig voneinander vorgesehen sind,
wobei das Abgas-Regulierventil (33) angeordnet ist, um gemäß einem Steuersignal von dem Reglerteil (55) für die Energieturbine (7) gesteuert zu werden, und
wobei das Dampf-Regulierventil (37) angeordnet ist, um gemäß einem Steuersignal von dem Reglerteil (57) für die Dampfturbine (9) gesteuert zu werden.

9. Der Turbinengenerator gemäß einem der Ansprüche 5 bis 8,
wobei der Turbinengenerator angeordnet ist, um durch Abgasenergie des Abgases von einem Dieselmotor (3) zum Antreiben eines Schiffs angetrieben zu werden,
wobei ein Dieselmotorgenerator (60) zusätzlich zu dem Turbinengenerator vorgesehen ist,
wobei der Kontroller (43) ein Lastaufteilungs-Steuerteil (64) aufweist, in dem eine durch die Energieturbine (7) zuführbare Energie, eine durch die Dampfturbine (9) zuführbare Energie und eine durch den Dieselmotorgenerator (60) zuführbare Energie eingestellt sind oder werden, und
wobei wenn eine Energieanforderung des Schiffs abnimmt und überschüssige Energie erzeugt wird, der Kontroller (43) konfiguriert ist, um die zuführbare Energie des Dieselmotorgenerators (60) zu minimieren, die zuführbare Energie der Energieturbine (7) zu minimieren und dann die zuführbare Energie der Dampfturbine (9) zu verringern.

## Revendications

1. Procédé de production d'énergie, comprenant :
entraîner un moteur (3) diesel et faire s'échapper des gaz d'échappement du moteur (3) diesel;
entraîner une turbine (7) de puissance par les gaz d'échappement s'échappant du moteur (3) diesel;
produire de la vapeur en envoyant les gaz d'échappement du moteur (3) diesel à un échangeur de chaleur (21) à gaz d'échappement;
entraîner une turbine (9) à vapeur par la vapeur produite par l'échangeur de chaleur (21) à gaz d'échappement;
lorsque l'énergie exigée diminue et lorsque l'énergie produite devient un surplus, réduire l'alimentation en les gaz d'échappement de la turbine (7) de puissance et
après que la production de la turbine (7) de puissance a été réduite à un minimum, réduire l'alimentation en vapeur de la turbine (9) en vapeur.

2. Procédé de production de puissance suivant la revendication 1,
dans lequel réduire la production de la turbine (7) de puissance au minimum comprend réduire la production de la turbine (7) de puissance à une production minimum fixée à l'avance, y compris réduire la production de la turbine (7) de puissance à zéro.

3. Procédé de production de puissance suivant la revendication 1 ou 2,
dans lequel on fixe à l'avance une énergie pouvant être fournie par la turbine (7) de puissance et une énergie pouvant être fournie par la turbine (9) à vapeur et
dans lequel le procédé comprend en outre le stade dans lequel :
lorsque l'énergie exigée diminue et lorsque l'énergie produite devient un surplus, minimiser l'énergie pouvant être fournie par la turbine (7) de puissance, puis réduire l'énergie pouvant être fournie par la turbine (9) à vapeur.

4. Procédé de production de puissance suivant la revendication 1, 2 ou 3, comprenant en outre le stade dans lequel :
on entraîne un générateur (60) à moteur diesel;
dans lequel on fixe à l'avance une énergie pouvant être fournie par la turbine (7) de puissance, une énergie pouvant être fournie par la turbine (9) à vapeur et une énergie pouvant être fournie par le générateur (60) à moteur diesel et
dans lequel le procédé comprend en outre le stade dans lequel :
lorsque l'énergie exigée diminue et lorsque l'énergie produite devient un surplus, minimiser l'énergie pouvant être fournie par le générateur (60) à moteur diesel, puis réduire l'énergie pouvant être fournie par la turbine (9) à vapeur.

5. Générateur à turbine, qui est formé en montant une turbine (7) de puissance, de préférence une turbine à gaz, et une turbine (9) à vapeur en série, la turbine (7) de puissance étant disposée de manière à être entraînée par de l'énergie des gaz d'échappement sortant d'un moteur (3) diesel, ayant un turbocompresseur (5) à suralimentation des gaz d'échappement, le générateur à turbine comprenant :
un trajet (L1) d'extraction pour extraire une partie des gaz d'échappement et envoyer la partie des gaz d'échappement au turbocompresseur (5) à suralimentation;
une vanne (33) de régulation des gaz d'échappement pour réguler une alimentation en les gaz d'échappement de la turbine (7) de puissance, la vanne (33) de régulation des gaz d'échappement étant prévue dans un trajet (L2) d'extraction d'une partie des gaz d'échappement allant à la turbine (7) de puissance;
un trajet (J1) d'alimentation en vapeur pour envoyer à la turbine (9) à vapeur de la vapeur produite par échange de chaleur avec de la chaleur d'échappement des gaz d'échappement dans un échangeur de chaleur (21) à gaz d'échappement;
une vanne (37) de régulation de la vapeur pour réguler l'alimentation en vapeur, la vanne (37) de régulation de la vapeur étant prévue dans le trajet (J1) d'alimentation en vapeur et
une unité (43) de commande configurée pour, lorsque l'énergie exigée diminue et lorsque l'énergie produit devient un surplus, réduire l'alimentation en les gaz d'échappement de la turbine (7) de puissance pour minimiser une production de la turbine (7) de puissance, puis réduire l'alimentation en vapeur de la turbine (9) à vapeur.

6. Générateur à turbine suivant la revendication 5,
dans lequel l'unité (43) de commande est configurée pour, afin de minimiser la production de la turbine (7) de puissance, réduire la production de la turbine (7) de puissance à une production minimum fixée à l'avance, y compris réduire la production de la turbine (7) de puissance à zéro.

7. Générateur à turbine suivant la revendication 5 ou 6,
dans lequel l'unité (43) de commande comprend une partie (53; 64) de commande de partage de charge, dans laquelle une énergie pouvant être fournie par la turbine (7) de puissance et une énergie pouvant être fournie par la turbine (9) à vapeur sont fixées à l'avance et dans laquelle un partage d'énergie pouvant être fournie est fixé.

8. Générateur à turbine suivant la revendication 5, 6 ou 7, dans lequel l'unité (43) de commande comprend une partie (55) de régulation de la turbine (7) de puissance et une partie (57) de régulation de la turbine (9) à vapeur, qui ont des fonctions de commande de perte de vitesse et sont prévues indépendamment l'une de l'autre,
dans lequel la vanne (33) de régulation des gaz d'échappement est conçue pour être commandée en fonction d'un signal de commande de la partie (55) de régulation de la turbine (7) de puissance et
dans lequel la vanne (37) de régulation de la vapeur est conçue pour être commandée en fonction d'un signal de commande de la partie (57) de régulation de la turbine (9) à vapeur.

9. Générateur à turbine suivant l'une des revendications 5 à 8,
dans lequel le générateur à turbine est disposé de manière à être entraîné par l'énergie d'échappement des gaz d'échappement d'un moteur (3) diesel afin de propulser un bateau,
dans lequel un générateur (60) à moteur diesel est prévu en plus du générateur à turbine,
dans lequel l'unité (43) de commande comprend une partie (64) de commande de partage de charge, dans laquelle une énergie pouvant être fournie par la turbine (7) de puissance, une énergie pouvant être fournie par la turbine (9) à vapeur et une énergie pouvant être fournie par le générateur (60) à moteur diesel sont fixées et
dans lequel, lorsque l'énergie exigée par le bateau diminue et lorsque l'énergie produite devient un surplus, l'unité (43) de commande est configurée pour minimiser l'énergie pouvant être fournie par le générateur (60) à moteur diesel, pour minimiser l'énergie pouvant être fournie par la turbine (7) de puissance, puis pour réduire l'énergie pouvant être fournie par la turbine (9) à vapeur.
